(19) Europäisches Patentamt / European Patent Office / Office européen des brevets

(11) **EP 3 472 114 B1**

(12) **FASCICULE DE BREVET EUROPEEN**

(45) Date de publication et mention
de la délivrance du brevet:
**25.03.2020 Bulletin 2020/13**

(21) Numéro de dépôt: **17740049.6**

(22) Date de dépôt: **14.06.2017**

(51) Int Cl.:
*C03C 17/36* (2006.01)   *C03C 8/16* (2006.01)
*C03C 14/00* (2006.01)   *C03C 17/34* (2006.01)
*C03C 17/00* (2006.01)   *C03C 8/14* (2006.01)

(86) Numéro de dépôt international:
**PCT/FR2017/051534**

(87) Numéro de publication internationale:
**WO 2017/216483 (21.12.2017 Gazette 2017/51)**

(54) **FEUILLE DE VERRE AVEC EMAIL REFLECHISSANT LE RAYONNEMENT INFRAROUGE**

GLASSCHEIBE MIT EMAILLE MIT REFLEKTION VON INFRAROTSTRAHLUNG

GLASS SHEET WITH ENAMEL REFLECTING INFRARED RADIATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.06.2016 FR 1655538**

(43) Date de publication de la demande:
**24.04.2019 Bulletin 2019/17**

(73) Titulaire: **Saint-Gobain Glass France
92400 Courbevoie (FR)**

(72) Inventeur: **RUFINO, Benoît
60350 Courtieux (FR)**

(74) Mandataire: **Saint-Gobain Recherche
Département Propriété Industrielle
39 Quai Lucien Lefranc
93300 Aubervilliers (FR)**

(56) Documents cités:
EP-A1- 2 314 553     FR-A1- 2 810 029
FR-A1- 3 010 074     US-A- 5 898 180

**Description**

La présente invention concerne des feuilles de verre partiellement émaillées pour portes de fours ou de réfrigérateurs et un procédé de production de telles feuilles.

Dans le domaine des portes vitrées de four ou des portes vitrées de réfrigérateurs, qu'il s'agisse de vitrages monolithiques ou à feuilles multiples, il est connu de recouvrir au moins une face d'au moins une des feuilles de verre d'un revêtement transparent à basse émissivité afin d'améliorer l'isolation thermique du four et de réduire le risque de brûlures en cas de contact avec la porte du four en fonctionnement.

Par ailleurs il est usuel, pour des raisons esthétiques, d'opacifier partiellement les feuilles de verre par un cadre, généralement de couleur noire, imprimé par sérigraphie en périphérie des feuilles de verre.

Il y a une demande croissante, de la part des fabricants de four notamment, de disposer de feuilles de verre à couche transparente à faible émissivité avec un cadre opaque en émail. Pour des raisons de réduction des coûts de production, cette couche d'émail devra être formée pendant l'étape de renforcement thermique du verre (cuisson suivie de la trempe).

La création d'un cadre noir ou de couleur foncée en émail sur une feuille de verre à basse émissivité s'avère toutefois difficile. En effet, lors du chauffage de la feuille imprimée sur une partie de sa surface avec une pâte de verre pigmentée, par exemple avec un pigment noir habituel de type spinelle d'oxyde de chrome-cuivre, on observe fréquemment un défaut de planéité du produit trempé et la non-conformité de la feuille de verre obtenue à la norme de fragmentation pour le verre de sécurité sodo-calcique trempé ; les zones couvertes par l'émail présentent un profil de fragmentation différent de celles couvertes par la couche bas émissive mais non couverte d'émail, alors que la norme EN 1250-1 exige une fragmentation homogène sur l'ensemble de la feuille de verre.

Dans certains cas, on peut constater que la feuille de verre se casse au moment de la trempe (refroidissement rapide).

Les problèmes décrits ci-dessus n'existent pas ou très peu en l'absence de revêtement transparent à faible émissivité et s'accentuent lorsque l'émissivité du revêtement diminue. Ils ont été attribués à la différence d'absorption d'énergie thermique, reçue sous forme de rayonnement infrarouge par les zones couvertes du revêtement bas émissif seulement et celles couvertes du revêtement bas émissif et de la couche d'émail.

La présente invention est basée sur la découverte que les problèmes décrits ci-dessus peuvent être réduits, voire supprimés, lorsqu'on utilise pour la pigmentation de l'émail des pigments céramiques à haute réflectance dans le proche infrarouge.

Le brevet US 5 898 180 divulgue des émaux destinés à être utilisés en tant que revêtement intérieur de fours chauffés par des sources de rayonnement visible-NIR, telles que des lampes quartz halogène. Ces émaux sont décrits comme ayant une réflectance dans le domaine de longueur d'onde allant de 0,6 $\mu$m à 5 $\mu$m supérieure à 80 %. Les pigments réfléchissant le rayonnement visible et infrarouge énumérés dans ce document sont $TiO_2$, $ZnO$, $ZrO_2$ et $Sb_2O_3$. Ce sont des pigments blancs qui, pour des raisons esthétiques, sont inutilisables pour l'émail de portes de fours. Dans ce domaine, la demande du marché va en effet presque exclusivement vers des émaux de couleur très foncée, de préférence des émaux noirs.

Le problème sous-jacent à la présente invention est donc de trouver des pigments qui sont à la fois fortement absorbants dans le visible et suffisamment réfléchissants dans le domaine des longueurs d'onde du rayonnement IR utilisé pour le chauffage des vitrages avant la trempe thermique.

La présente invention a donc pour premier objet une feuille de verre comportant un substrat en verre minéral trempé portant, sur une de ses faces, un revêtement à basse émissivité et, sur celui-ci, une couche d'émail contenant un ou plusieurs pigments céramiques, la couche d'émail couvrant une partie seulement du revêtement transparent à basse émissivité et laissant libre une autre partie de celui-ci, caractérisée par le fait qu'au moins 50 % en poids des pigments céramiques sont choisis parmi les pigments céramiques réfléchissant le rayonnement infrarouge proche (NIR) présentant une réflectance à 1000 nm, déterminée selon la norme ASTM E 903, au moins égale à 40 % et une clarté L* inférieure à 30.

Le substrat en verre minéral portant le revêtement à faible émissivité et la couche d'émail peut en principe être en n'importe quel verre minéral trempé ou trempable, compatible avec une utilisation dans une porte de four ou de réfrigérateur. Il s'agit de préférence d'un verre sodo-calcique d'une épaisseur comprise entre 2 et 6 mm, en particulier entre 2,5 et 4,5 mm.

Les revêtements à basse émissivité sont connus en tant que tels. Ils sont généralement constitués d'une ou plusieurs couches d'un oxyde conducteur transparent (TCO, de l'anglais *transparent conductive oxide*) tel que l'oxyde d'étain dopé au fluor ou à l'antimoine, l'oxyde mixte d'indium et d'étain. Il peut également s'agir d'empilements comportant au moins une mince couche métallique, par exemple une couche d'argent, disposée entre des couches diélectriques.

L'épaisseur des revêtements à basse émissivité est généralement comprise entre 5 et 250 nm, en particulier entre 5 et 150 nm.

Leur émissivité, déterminée selon la norme ISO 10292 :1994 (Annexe A), est avantageusement comprise entre 0,01 et 0,30, de préférence entre 0,03 et 0,25, en particulier entre 0,05 et 0,20.

La couche d'émail de couleur foncée couvre une partie seulement du revêtement à basse émissivité et laisse une autre partie de ce revêtement libre. La surface du revêtement à basse émissivité couverte par la couche d'émail représente de préférence entre 10 % et 60 %, en particulier entre 15 et 50 %, plus préférentiellement entre 20 et 40 % de la surface totale du revêtement à basse émissivité. La couche d'émail couvre de préférence le revêtement basse émissivité sur la partie périphérique, près du bord de la feuille de verre minéral trempé, en particulier à la manière d'un cadre ou d'un passe-partout de couleur foncée s'étendant jusqu'à la tranche de la feuille de verre.

Cette couche d'émail est de préférence opaque à la lumière visible.

Sa densité optique (D), définie par la formule suivante

$$D = - \log I / I_0$$

où $I$ est l'intensité énergétique transmise sur l'ensemble du spectre de la lumière visible et $I_0$ l'intensité énergétique incidente sur l'ensemble du spectre de la lumière visible, est de préférence comprise entre 1,8 et 5, en particulier entre 2,0 et 4, en particulier entre 2,2 et 3.

L'épaisseur de la couche d'émail est avantageusement comprise entre 5 $\mu$m et 40 $\mu$m, de préférence entre 7 $\mu$m et 25 $\mu$m, et en particulier entre 10 et 15 $\mu$m.

La couche d'émail est constituée d'un liant vitreux et de pigments céramiques. Pour pouvoir préparer des émaux les plus opaques et les plus minces possibles, il est intéressant d'augmenter le plus possible la fraction volumique en pigments céramiques de l'émail. Au-delà d'une certaine limite, une augmentation de la teneur en pigments se traduit toutefois par une cohésion insuffisante et une fragilisation mécanique de la couche d'émail. Pour cette raison, la teneur totale en pigments céramiques de la couche d'émail ne devrait généralement pas dépasser environ 40 % en poids.

Dans un mode de réalisation préféré la teneur totale en pigments céramiques de la couche d'émail est comprise entre 20 % et 40 % en poids, de préférence entre 30 % et 39 % en poids et en particulier entre 35 % et 38 % en poids, rapporté au poids total de la couche d'émail.

Tous les pigments céramiques contenus dans la couche d'émail ne sont pas nécessairement des pigments réfléchissant le rayonnement infrarouge tels que définis ci-dessus. Pour constater les effets bénéfiques de l'utilisation de tels pigments, il est toutefois nécessaire qu'ils représentent au moins 50 % en poids de l'ensemble des pigments céramiques présents. De préférence ils représentent au moins 80 % en poids, et en particulier au moins 90 % en poids, idéalement au moins 95 % en poids de l'ensemble des pigments céramiques présents.

Pour réfléchir efficacement le rayonnement infrarouge, les particules de pigments céramiques ne doivent pas être trop petites. Leur diamètre est avantageusement du même ordre de grandeur que la longueur d'onde du rayonnement infrarouge réfléchi.

Les pigments réfléchissant le NIR utilisés dans la présente invention sont donc avantageusement constitués de particules ayant un diamètre moyen compris entre 500 nm et 10 $\mu$m, de préférence entre 600 nm et 5,0 $\mu$m, en particulier entre 700 nm et 3 $\mu$m.

Comme indiqué en introduction, les pigments céramiques réfléchissants les NIR utilisés dans la présente invention sont de couleur foncée, de préférence de couleur proche du noir. Ils sont donc différents des pigments blancs décrits dans le brevet US 5 898 180 qui réfléchissent à la fois très efficacement la lumière visible et le rayonnement infrarouge proche (réflectance diffuse dans l'infrarouge supérieure à 80 %).

La teinte d'un colorant ou pigment est classiquement définie dans l'espace colorimétrique CIE L*a*b* défini par trois grandeurs (L*, a* et b*) dont la première $L^*$ désigne la clarté. La valeur de $L^*$ va de 0 pour le noir à 100 pour le blanc.

La clarté $L^*$ des pigments céramiques réfléchissant le rayonnement NIR utilisés dans la présente invention est de préférence comprise entre 1 et 20, en particulier entre 2 et 10.

On peut citer à titre d'exemples de pigments céramiques de couleur foncée réfléchissant le rayonnement infrarouge proche (NIR) utilisables dans la présente invention les produits suivants :

- les hématites de chrome dopées Al et Ti commercialisées sous les dénominations V-780 Cool Colors IR Brown Black et V-799 Cool Colors IR Black par la société Ferro,
- les spinelles noires de cuivre-chrome-manganèse (CI pigment noir 28) commercialisées sous les dénominations commerciales 7890 Meteor Black et 9875 Meteor Plus HS Jet Black par la société BASF, ou Black 411 par la société Sphepherd,
- les spinelles cuivre-chrome-manganèse-baryum (CI pigment noir 28) disponibles sous les dénominations Meteor Plus Jet Black (BASF), Heucodur Brown 869 (Heubach), Heucodur Black 953 (Heubach), Heucodur Black 963,
- les hématites d'oxyde de chrome (CI pigment vert 17) disponibles auprès de la société Ferro sous les dénominations GEODE V-774 Cool Colors HS Black, GEODE V-775 Cool Colors IR Black, GEODE V-776 Cool Colors IR Black, GEODE V-778 Cool Colors IR Black, GEODE 10204 IR Eclipse IR Black, et O-1775B Ebony, ou auprès de la société Shepherd sous les dénominations Black 10C909 et Black 30C940 ;

- les spinelles noires chrome-fer-nickel (CI pigment noir 30) commercialisées par la société Ferro sous la dénomination GEODE 10456 Black ou par la société Heubach sous la dénomination Heucodur Black 950 ;
- les spinelles oxyde de fer-chrome (CI pigment marron 29) commercialisées par la société Shepherd sous la dénomination commerciale Black 411, ou par la société BASF sous les dénominations commerciales 9880 Meteor Plus High IR Jet Black, 9882 Meteor Plus Black, 9887 Meteor Plus High IR Black, 9889 Meteor Plus High IR Black ;
- les spinelles cobalt-chrome-fer (CI pigment noir 27) disponibles sous les dénominations Heucodur Black 955 (Heubach) ;
- les spinelles cuivre-chrome-fer (CI pigment noir 28) disponibles sous la dénomination Heucodur Black 9-100 (Heubach) ;
- l'hématite d'oxyde de chrome (CI pigment vert 17) disponibles sous la dénomination Heucodur Black 910 (Heubach) ;
- les spinelles noires fer-chromite (CI pigment marron 35) disponibles sous les dénominations 7895 Meteor High IR Black, Heucodur Black 920 (Heubach) et Heucodur Black 940 (Heubach) ;
- les spinelles fer-chrome-manganèse (CI pigment marron 29) disponibles sous les dénominations 9880 Meteor High IR Black, 9882 Meteor Plus Black, 9887 Meteor Plus High IR Black, 9889 Meteor Plus High IR Black,
- les spinelles manganèse, bismuth, strontium et/ou vanadium exemptes de chrome, disponibles sous les dénominations GEODE 10201 Eclipse Black (Ferro), GEODE 10202 Eclipse Black (Ferro) et GEODE 10203 Eclipse Black (Ferro).

Parmi ces pigments, on préfère tout particulièrement les chromites de fer (CI pigment marron 35 et CI pigment marron 29) et les chromites de fer et nickel (CI pigment noir 30).

Le liant vitreux qui constitue au moins 60 % en poids de la couche d'émail, assure le lien entre les particules de pigments et l'adhésion de la couche d'émail au revêtement à basse émissivité. Le liant est généralement obtenu par fusion d'une fritte de verre ayant un point de ramollissement inférieure d'au moins 50 °C à la température à laquelle est chauffée la feuille de verre avant la trempe thermique. Le point de ramollissement du liant vitreux est de préférence inférieur à 590 °C.

La réflectance à 1000 nm (mesurée selon ASTM E 903) de la couche d'émail de la présente invention, à base du liant vitreux et des pigments céramiques tels que définis ci-dessus, est de préférence supérieure à 13 %, en particulier supérieure à 15 %, et plus préférentiellement supérieure à 18 %. Elle est généralement inférieure à 70 %.

La présente invention a également pour objet une porte de four comprenant au moins une feuille de verre selon l'invention telle que décrite ci-dessus.

Cette porte de four est en particulier un vitrage à feuilles multiples dans lequel, lorsque la porte est installée en façade de la cavité du four, le revêtement transparent à basse émissivité est de préférence tourné vers la cavité du four.

Dans un tel four fermé par un vitrage à feuilles multiples, la feuille de verre trempée de la présente invention comporte de préférence un substrat en verre sodo-calcique et est de préférence placée de manière à ne pas être en contact direct avec la cavité du four. Il est en effet préférable d'interposer entre la cavité du four et la feuille de verre de la présente invention une feuille de verre relativement plus résistante aux variations de température qu'une feuille en verre sodo-calcique.

Dans un mode de réalisation, la porte de four de la présente invention comporte en outre une feuille en verre borosilicaté ou en verre sodo-calcique revêtue d'une couche à basse émissivité, placée entre la cavité du four et la feuille de verre selon l'invention, séparant ainsi cette dernière de la cavité du four.

La présente invention a également pour objet une porte de réfrigérateur comportant au moins une feuille de verre selon l'invention telle que décrite ci-dessus

Enfin, la présente invention a pour objet un procédé de fabrication d'une feuille de verre pour porte de four ou de réfrigérateur comportant un substrat en verre minéral trempé portant, sur une de ses faces, un revêtement à basse émissivité et, sur celui-ci, une couche d'émail contenant un ou plusieurs pigments céramiques, ledit procédé comportant les étapes suivantes :

- mise à disposition d'un substrat en verre minéral portant sur au moins une de ces faces un revêtement transparent à basse émissivité ;
- application, sur une partie seulement du revêtement transparent à basse émissivité, d'une pâte de verre pigmentée comprenant une fritte de verre et un ou plusieurs pigments céramiques, au moins 50 % en poids, de préférence au moins 80 % en poids, et en particulier au moins 95 % en poids des pigments céramiques étant choisis parmi les pigments céramiques réfléchissant le rayonnement infrarouge proche (NIR) présentant une réflectance à 1000 nm, déterminée selon la norme ASTM E 903, au moins égale à 40 % et une clarté L* inférieure à 30;
- irradiation de la feuille de verre ainsi obtenue au moyen de sources de rayonnement NIR de manière à la chauffer à une température proche de son point de ramollissement ;

- trempe thermique de la feuille de verre.

Le substrat en verre minéral est de préférence un verre *float*, prédécoupé aux dimensions de la porte de four ou de réfrigérateur dans laquelle la feuille de verre doit être intégrée. Il est couvert sur au moins une face, de préférence sur les deux faces, d'un revêtement transparent à basse émissivité, par exemple un oxyde conducteur transparent déposé par pulvérisation cathodique assistée par magnétron ou par dépôt en phase vapeur (CVD, *Chemical Vapor Deposition*).

On prépare une pâte de verre pigmentée de manière connue en mélangeant une fritte de verre finement broyée avec une solution d'un polymère dans un solvant organique et avec le ou les pigments céramiques.

La pâte de verre est appliquée ensuite, par exemple par sérigraphie, sur une partie du revêtement transparent à basse émissivité en une épaisseur humide de quelques dizaines de micromètres.

Après séchage de la couche imprimée, l'ensemble est porté en quelques minutes à une température comprise entre 600 et 800 °C puis trempé dans un four de trempe continu ou oscillant.

*Exemple*

On prépare deux pâtes de verre ayant la composition pondérale indiquée au tableau ci-dessous

|  | Comparatif | Selon l'invention |
|---|---|---|
| fritte | 50% | 50% |
| Pigment réfléchissant IR (Fe-Cr) | - | 30% |
| Pigment noir standard (Cu-Cr) | 30% | - |
| Solvant + polymère | 20% | 20% |

Ces deux pâtes sont imprimées par sérigraphie sous forme d'un cadre en bordure d'un substrat en verre sodo-calcique (dimensions 50 cm x 50 cm) portant sur chacune de ses faces un revêtement (SGG EkoVision II) ayant une émissivité de 0,2 et qui est constitué de la succession de couches suivante : Verre // $Si_3N_4$ / $SiO_2$ / ITO / $Si_3N_4$ / $SiO_2$ / TiOx.

La viscosité des pâtes est d'environ 80 poises et l'épaisseur des couches est d'environ 27 $\mu$m. Les substrats imprimés sont ensuite séchés dans un four à lampes IR à une température d'environ 130 °C jusqu'à évaporation complète du solvant organique.

Les deux feuilles de verre sont ensuite portée sur une durée de 4 minutes à une température de 670 °C au moyen de résistances électriques émettant un rayonnement infrarouge ayant des longueurs d'ondes jusqu'à environ 5 $\mu$m, puis refroidies brusquement au moyen d'un flux d'air froid.

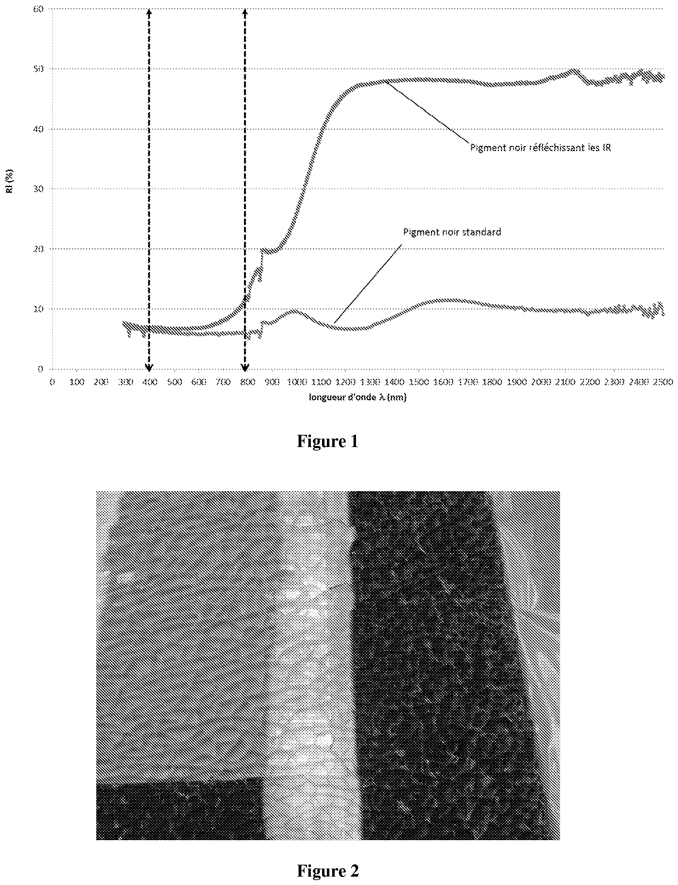

La Figure 1 montre le spectre de réflexion du rayonnement UV-visible-IR de l'émail contenant le pigment noir standard et de l'émail contenant le pigment noir réfléchissant le rayonnement IR.

Lorsqu'on soumet la feuille de verre comparative à un essai de fragmentation selon la norme la norme EN 1250-1, on constate que les morceaux de verre sont significativement plus petits dans la zone couverte par l'émail noir que dans la zone couverte uniquement par le revêtement à basse émissivité. La différence de taille entre les zones est telle que la feuille de verre est jugée non conforme au test de fragmentation.

Lorsqu'on soumet la feuille de verre émaillée selon l'invention au même test de fragmentation selon la norme EN 1250-1 les morceaux de verre dans les zones couvertes par l'émail ont des dimensions similaires à celles observées dans les zones non couvertes par l'émail. La Figure 2 montre une photo d'une telle feuille de verre selon l'invention après fragmentation selon la norme EN 1250-1.

**Revendications**

1. Feuille de verre comportant un substrat en verre minéral trempé portant, sur une de ses faces, un revêtement transparent à basse émissivité et, sur celui-ci, une couche d'émail contenant un ou plusieurs pigments céramiques, la couche d'émail couvrant une partie seulement de la couche à basse émissivité et laissant libre une autre partie de celle-ci, **caractérisée par le fait qu'**au moins 50 % en poids, de préférence au moins 80 % en poids, et en particulier au moins 95 % en poids des pigments céramiques sont choisis parmi les pigments céramiques réfléchissant le rayonnement infrarouge proche (NIR) présentant une réflectance à 1000 nm, déterminée selon la norme ASTM E 903, au moins égale à 40 % et une clarté L* inférieure à 30.

**2.** Feuille de verre selon la revendication 1, **caractérisée par le fait que** la teneur totale en pigments céramiques de la couche d'émail est comprise entre 20 % et 40 % en poids, de préférence entre 30 % et 39 % en poids, en particulier entre 35 % et 38 % en poids, rapporté au poids total de la couche d'émail.

**3.** Feuille de verre selon la revendication 1 ou 2, **caractérisée par le fait que** la clarté *L\** des pigments céramiques réfléchissant le rayonnement NIR est comprise entre 1 et 20, en particulier entre 2 et 10.

**4.** Feuille de verre selon l'une des revendications précédentes, **caractérisée par le fait que** le ou les pigments céramiques réfléchissant le rayonnement NIR sont choisis dans le groupe formé par CI pigment noir 27, CI pigment noir 28, CI pigment noir 30, CI pigment vert 17, CI pigment marron 29, CI pigment marron 35, hématite d'oxyde de chrome dopée Al et Ti, spinelle d'oxyde de manganèse, bismuth, strontium et/ou vanadium exempte de chrome.

**5.** Feuille de verre selon l'une des revendications précédentes, **caractérisée par le fait que** le ou les pigments réfléchissants le NIR sont choisis parmi les chromites de fer et chromites de fer et nickel.

**6.** Feuille de verre selon l'une quelconque des revendications précédentes, **caractérisée par le fait que** la couche d'émail a une épaisseur comprise entre 5 $\mu$m et 40 $\mu$m, de préférence entre 7 $\mu$m et 25 $\mu$m, et en particulier entre 10 et 15 $\mu$m.

**7.** Feuille de verre selon l'une quelconque des revendications précédentes, **caractérisée par le fait que** la couche d'émail couvre la partie périphérique de la couche à basse émissivité près du bord de la feuille de verre minéral trempé.

**8.** Feuille de verre selon l'une quelconque des revendications précédentes, **caractérisée par le fait que** les pigments réfléchissant le NIR sont constitués de particules ayant un diamètre moyen compris entre 500 nm et 10 $\mu$m, de préférence entre 600 nm et 5,0 $\mu$m, en particulier entre 700 nm et 3 $\mu$m.

**9.** Feuille de verre selon l'une quelconque des revendications précédentes, **caractérisée par le fait que** la couche d'émail présente une réflectance à 1000 nm (mesurée selon ASTM E 903) supérieure à 13%, de préférence supérieure à 15 %, en particulier supérieure à 18 %.

**10.** Feuille de verre selon l'une quelconque des revendications précédentes, **caractérisé par le fait que** la couche à basse émissivité a une émissivité, déterminée selon la norme ISO 10292 :1994 (Annexe A), comprise entre 0,01 et 0,30, de préférence entre 0,03 et 0,25, en particulier entre 0,05 et 0,20.

**11.** Porte de four comprenant au moins une feuille de verre selon l'une quelconque des revendications précédentes.

**12.** Porte de four selon la revendication 11, **caractérisée par le fait qu'**il s'agit d'un vitrage à feuilles multiples et **par le fait que**, lorsque la porte est installée sur le four, la couche à basse émissivité est tournée vers la cavité du four.

**13.** Porte de four selon la revendication 11 ou 12, **caractérisé par le fait qu'**une feuille en verre borosilicaté ou en verre sodo-calcique revêtue d'une couche à basse émissivité est placée entre la feuille de verre selon l'une des revendications 1 à 10 et la cavité du four, séparant ainsi cette dernière de la cavité du four.

**14.** Porte de réfrigérateur comprenant au moins une feuille de verre selon l'une quelconque des revendications 1 à 10.

**15.** Procédé de fabrication d'une feuille de verre selon l'une quelconque des revendications 1 à 10, **caractérisé par le fait qu'**il comprend

- la mise à disposition d'un substrat en verre minéral portant sur au moins une de ces faces un revêtement transparent à basse émissivité ;
- l'application, sur une partie seulement du revêtement transparent à basse émissivité, d'une pâte de verre pigmentée comprenant une fritte de verre et un ou plusieurs pigments céramiques, au moins 50 % en poids, de préférence au moins 80 % en poids, et en particulier au moins 95 % en poids des pigments céramiques étant choisis parmi les pigments céramiques réfléchissant le rayonnement infrarouge proche (NIR) présentant une réflectance à 1000 nm, déterminée selon la norme ASTM E 903, au moins égale à 40 % et une clarté L\* inférieure à 30 ;
- l'irradiation de la feuille de verre ainsi obtenue au moyen de sources de rayonnement NIR de manière à la chauffer à une température proche de son point de ramollissement ;

- trempe thermique de la feuille de verre.

**Patentansprüche**

1. Glasscheibe mit einem Substrat aus vorgespanntem Mineralglas, das auf einer seiner Seiten einen niedrigemissiven transparenten Überzug trägt und auf diesem eine Emailschicht, die ein oder mehrere keramische Pigmente enthält, wobei die Emailschicht nur einen Teil der niedrigemissiven Schicht bedeckt und einen anderen Teil davon freilässt, **dadurch gekennzeichnet, dass** mindestens 50 Gew.-%, bevorzugt mindestens 80 Gew.-% und insbesondere mindestens 95 Gew.-% der keramischen Pigmente unter den keramischen Pigmenten gewählt sind, die die Strahlung im nahen Infrarot (NIR) reflektieren und ein nach der Norm ASTM E 903 bestimmtes Reflexionsvermögen bei 1000 nm von mindestens 40 % und eine Klarheit L* von weniger als 30 aufweisen.

2. Glasscheibe nach Anspruch 1, **dadurch gekennzeichnet, dass** der Gesamtgehalt der Emailschicht an keramischen Pigmenten zwischen 20 Gew.-% und 40 Gew.-%, bevorzugt zwischen 30 Gew.-% und 39 Gew.-%, insbesondere zwischen 35 Gew.-% und 38 Gew.-% bezogen auf das Gesamtgewicht der Emailschicht liegt.

3. Glasscheibe nach Anspruch 1 oder 2, **dadurch gekennzeichnet, dass** die Klarheit *L** der die NIR-Strahlung reflektierenden keramischen Pigmente zwischen 1 und 20, insbesondere zwischen 2 und 10 liegt.

4. Glasscheibe nach einem der vorhergehenden Ansprüche, **dadurch gekennzeichnet, dass** das oder die NIR-Strahlung reflektierenden keramischen Pigmente aus der Gruppe gewählt sind, die aus CI Pigment Schwarz 27, CI Pigment Schwarz 28, CI Pigment Schwarz 30, CI Pigment Grün 17, CI Pigment Braun 29, CI Pigment Braun 35, Al- und Tidotiertem Chromoxid-Hämatit, Manganoxid-Spinell, Bismut, Strontium und/oder chromfreiem Vanadium gebildet ist.

5. Glasscheibe nach einem der vorhergehenden Ansprüche, **dadurch gekennzeichnet, dass** das oder die NIR reflektierenden Pigmente unter den Eisenchromiten und Eisen-Nickel-Chromiten gewählt sind.

6. Glasscheibe nach einem der vorhergehenden Ansprüche, **dadurch gekennzeichnet, dass** die Emailschicht eine Dicke zwischen 5 $\mu$m und 40 $\mu$m, bevorzugt zwischen 7 $\mu$m und 25 $\mu$m und insbesondere zwischen 10 und 15 $\mu$m besitzt.

7. Glasscheibe nach einem der vorhergehenden Ansprüche, **dadurch gekennzeichnet, dass** die Emailschicht den Umfangsbereich der niedrigemissiven Schicht in der Nähe des Randes der vorgespannten Mineralglasscheibe bedeckt.

8. Glasscheibe nach einem der vorhergehenden Ansprüche, **dadurch gekennzeichnet, dass** die NIR reflektierenden Pigmente aus Partikeln mit einem mittleren Durchmesser zwischen 500 nm und 10 $\mu$m, bevorzugt zwischen 600 nm und 5,0 $\mu$m, insbesondere zwischen 700 nm und 3 $\mu$m bestehen.

9. Glasscheibe nach einem der vorhergehenden Ansprüche, **dadurch gekennzeichnet, dass** die Emailschicht ein Reflexionsvermögen bei 1000 nm (gemessen nach ASTM E 903) von mehr als 13 %, vorzugsweise mehr als 15 %, insbesondere mehr als 18 % aufweist.

10. Glasscheibe nach einem der vorhergehenden Ansprüche, **dadurch gekennzeichnet, dass** die niedrigemissive Schicht einen nach der Norm ISO 10292:1994 (Anhang A) bestimmten Emissionsgrad zwischen 0,01 und 0,30, bevorzugt zwischen 0,03 und 0,25, insbesondere zwischen 0,05 und 0,20 besitzt.

11. Ofentür mit mindestens einer Glasscheibe nach einem der vorhergehenden Ansprüche.

12. Ofentür nach Anspruch 11, **dadurch gekennzeichnet, dass** es sich um eine Mehrfachverglasung handelt und dass die niedrigemissive Schicht, wenn die Tür am Ofen angebracht ist, dem Innenraum des Ofens zugewandt ist.

13. Ofentür nach Anspruch 11 oder 12, **dadurch gekennzeichnet, dass** eine mit einer niedrigemissiven Schicht überzogene Scheibe aus Borosilikatglas oder Kalknatronglas zwischen der Glasscheibe nach einem der Ansprüche 1 bis 10 und dem Innenraum des Ofens angeordnet ist und so Letztere vom Innenraum des Ofens trennt.

14. Kühlschranktür mit mindestens einer Glasscheibe nach einem der Ansprüche 1 bis 10.

15. Verfahren zur Herstellung einer Glasscheibe nach einem der Ansprüche 1 bis 10, **dadurch gekennzeichnet, dass** es umfasst

 - das Bereitstellen eines Substrats aus Mineralglas, das auf mindestens einer seiner Seiten einen niedrigemissiven transparenten Überzug trägt;
 - das Aufbringen einer pigmentierten Glaspaste, die eine Glasfritte und ein oder mehrere keramische Pigmente umfasst, auf nur einem Teil des niedrigemissiven transparenten Überzugs, wobei mindestens 50 Gew.-%, bevorzugt mindestens 80 Gew.-%, und insbesondere mindestens 95 Gew.-% der keramischen Pigmente unter den keramischen Pigmenten gewählt sind, die Strahlung im nahen Infrarot (NIR) reflektieren und ein nach der Norm ASTM E 903 bestimmtes Reflexionsvermögen bei 1000 nm von mindestens 40 % und eine Klarheit L* von weniger als 30 aufweisen;
 - Bestrahlen der so erhaltenen Glasscheibe mit NIR-Strahlungsquellen, so dass sie auf eine Temperatur nahe ihrem Erweichungspunkt erwärmt wird;
 - thermisches Vorspannen der Glasscheibe.

## Claims

1. A glass sheet comprising a tempered mineral glass substrate bearing, on one of its faces, a low-emissivity transparent coating and, on this coating, an enamel layer containing one or more ceramic pigments, the enamel layer covering only a portion of the low-emissivity layer and leaving another part thereof free,
   **characterized in that** at least 50% by weight, preferably at least 80% by weight, and in particular at least 95% by weight of the ceramic pigments are chosen from ceramic pigments that reflect near-infrared radiation (NIR) having a reflectance at 1000 nm, determined according to the standard ASTM E 903, at least equal to 40% and a lightness L* of less than 30.

2. The glass sheet as claimed in claim 1, **characterized in that** the total content of ceramic pigments of the enamel layer is between 20% and 40% by weight, preferably between 30% and 39% by weight, in particular between 35% and 38% by weight, relative to the total weight of the enamel layer.

3. The glass sheet as claimed in claim 1 or 2, **characterized in that** the lightness $L*$ of the ceramic pigments reflecting the NIR radiation is between 1 and 20, in particular between 2 and 10.

4. The glass sheet as claimed in one of the preceding claims, **characterized in that** the ceramic pigment or pigments reflecting the NIR radiation are chosen from the group formed by CI Pigment Black 27, CI Pigment Black 28, CI Pigment Black 30, CI Pigment Green 17, CI Pigment Brown 29, CI Pigment Brown 35, Al- and Ti-doped chromium oxide hematite, chromium-free manganese, bismuth, strontium and/or vanadium oxide spinel.

5. The glass sheet as claimed in one of the preceding claims, **characterized in that** the pigment or pigments reflecting the NIR are chosen from iron chromites and iron nickel chromites.

6. The glass sheet as claimed in any one of the preceding claims, **characterized in that** the enamel layer has a thickness of between 5 μm and 40 μm, preferably between 7 μm and 25 μm, and in particular between 10 and 15 μm.

7. The glass sheet as claimed in any one of the preceding claims, **characterized in that** the enamel layer covers the peripheral portion of the low-emissivity layer close to the edge of the tempered mineral glass sheet.

8. The glass sheet as claimed in any one of the preceding claims, **characterized in that** the pigments reflecting the NIR are formed of particles having a mean diameter of between 500 nm and 10 μm, preferably between 600 nm and 5.0 μm, in particular between 700 nm and 3 μm.

9. The glass sheet as claimed in any one of the preceding claims, **characterized in that** the enamel layer has a reflectance at 1000 nm (measured according to ASTM E 903) of greater than 13%, preferably greater than 15%, in particular greater than 18%.

10. The glass sheet as claimed in any one of the preceding claims, **characterized in that** the low-emissivity layer has an emissivity, determined according to the standard ISO 10292:1994 (Annex A), of between 0.01 and 0.30, preferably between 0.03 and 0.25, in particular between 0.05 and 0.20.

**11.** An oven door comprising at least one glass sheet as claimed in any one of the preceding claims.

**12.** The oven door as claimed in claim 11, **characterized in that** it is a glazing having multiple sheets and **in that**, when the door is fitted to the oven, the low-emissivity layer faces toward the cavity of the oven.

**13.** The oven door as claimed in claim 11 or 12, **characterized in that** a sheet made of borosilicate glass or made of soda-lime glass coated with a low-emissivity layer is placed between the glass sheet as claimed in one of claims 1 to 10 and the cavity of the oven, thus separating the latter from the cavity of the oven.

**14.** A refrigerator door comprising at least one glass sheet as claimed in any one of claims 1 to 10.

**15.** A process for manufacturing a glass sheet as claimed in any one of claims 1 to 10, **characterized in that** it comprises

- providing a mineral glass substrate bearing, on at least one of its faces, a low-emissivity transparent coating;
- applying, on a portion only of the low-emissivity transparent coating, a pigmented glass paste comprising a glass frit and one or more ceramic pigments, at least 50% by weight, preferably at least 80% by weight, and in particular at least 95% by weight of the ceramic pigments being chosen from ceramic pigments that reflect near-infrared radiation (NIR) having a reflectance at 1000 nm, determined according to the standard ASTM E 903, at least equal to 40% and a lightness L* of less than 30;
- irradiating the glass sheet thus obtained by means of NIR radiation sources so as to heat it to a temperature close to its softening point;
- thermal tempering of the glass sheet.

**Figure 1**

**Figure 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5898180 A